# FASCICULE DE BREVET EUROPEEN

(11) **EP 2 621 770 B1**
(45) Date de publication et mention de la délivrance du brevet: **25.02.2015**
(21) Numéro de dépôt: 11768033.0
(22) Date de dépôt: 13.10.2011
(51) Int. Cl.: B60R 25/02, E05B 17/04, H01H 27/06, H01H 27/08

(54) **ANTIVOL DE DIRECTION POUR VEHICULE AUTOMOBILE**
LENKSCHLOSS FÜR KRAFTFAHRZEUGE
STEERING LOCK FOR A MOTOR VEHICLE

(43) Date de publication de la demande: 07.08.2013
(73) Titulaire: U-Shin France SAS, 94046 Créteil Cedex (FR)
(72) Inventeur: PERRIN, Christophe, F-94046 Creteil (FR); FROT, Donatien, 94046 Creteil (FR)
(74) Mandataire: Cabinet Novitech
(86) Numéro de dépôt international: PCT/EP2011/067932
(87) Numéro de publication internationale: WO 2012/042064

(56) Documents cités:
- EP-A1- 0 669 234
- DE-A1- 2 157 462
- DE-A1- 2 531 467
- DE-A1- 3 017 706
- FR-A1- 2 463 249

## Description

L'invention concerne un antivol de direction pour véhicule automobile comportant un corps d'antivol destiné à recevoir un verrou susceptible de tourner entre une position neutre et une position démarrage en passant par une position intermédiaire, une came destinée à être solidaire en rotation du verrou pour actionner des moyens de verrouillage de l'antivol en fonction de la position du verrou et un moyen anti-retour pour empêcher ladite came de tourner en sens contraire vers la position démarrage après qu'elle a atteint la position intermédiaire lorsqu'elle passe de la position démarrage vers la position neutre sans passer d'abord par la position neutre.

En particulier l'invention concerne, dans un antivol dont le verrou peut prendre au moins trois positions respectivement « stop », « marche » et « démarrage », un moyen anti-retour empêchant ladite came d'effectuer un second cycle de rotation vers la position « démarrage » consécutif à un premier cycle depuis la position « marche » vers la position « démarrage» sans passer d'abord par la position « stop » ou par une position intermédiaire entre les positions « stop » et « marche ».

On connaît déjà un antivol pour véhicule automobile comportant un verrou tournant entre des première et seconde positions angulaires extrêmes et qui, lorsqu'il est actionné à l'aide d'une clé conforme, déverrouille un pêne de verrouillage de la colonne de direction du véhicule automobile et commande l'alimentation électrique d'un certain nombre de circuits électriques du véhicule et notamment le démarrage du moteur.

Ainsi, en faisant pivoter le verrou à l'aide de sa clé, il est possible de faire passer le verrou depuis une première position angulaire, par exemple la position "stop" dans laquelle la plupart des circuits électriques du véhicule sont coupés de l'alimentation provenant de la batterie, à trois autres positions successives "accessoires", "marche" et "démarrage" dans lesquelles le commutateur électrique établit l'alimentation de différents circuits et organes du véhicule.

Généralement, la position "marche" correspond à l'alimentation électrique du circuit d'allumage du moteur thermique du véhicule. La position "démarrage" alimente en courant un moteur électrique de démarreur susceptible d'entraîner en rotation l'arbre moteur du moteur thermique du véhicule et qui a pour fonction de lancer le moteur thermique. Le démarreur, qui absorbe beaucoup de courant, est prévu pour ne fonctionner que quelques secondes d'affilée à chaque sollicitation. En effet, il est préférable de répéter plusieurs fois l'opération de démarrage si elle échoue, chaque tentative de démarrage devant être de courte durée. Ainsi, pour démarrer le moteur thermique de son véhicule, l'automobiliste amène, par exemple à l'aide de la clé du verrou, le verrou d'une position neutre, par exemple la position "stop" ou la position "accessoires", vers la position "démarrage" en passant par la position "marche". Après son passage par la position "démarrage", le commutateur est ramené par un ressort de rappel vers sa position "marche".

Toutefois, on s'est aperçu qu'il pouvait y avait des risques de détérioration du démarreur ou du moteur thermique lorsque le conducteur provoque une nouvelle alimentation du moteur électrique du démarreur alors que le moteur thermique est déjà lancé. Un autre risque existe aussi, alors même que le moteur thermique n'a pas encore été correctement lancé par une première tentative de démarrage, lorsque l'utilisateur provoque trop rapidement un ré-enclenchement du démarreur, avant que les différentes pièces mobiles du démarreur et de la transmission du véhicule n'aient reprises leur position initiale et se soient arrêtées de tourner.

Dans ce but, il a déjà été proposé des moyens d'anti-retour qui permettent d'éviter toute manipulation accidentelle susceptible de conduire à la rupture d'un des éléments mécaniques nécessaires à la bonne marche du véhicule.

### Le document DE2531467 décrit un antivol de direction pour véhicule.

Le but de l'invention est de concevoir un antivol de direction de véhicule automobile présentant un moyen anti-retour plus performant que ceux de la technique, et qui soit à la fois fiable, peu encombrant et peu coûteux à réaliser.

A cet effet, l'invention à pour objet un antivol de direction pour véhicule automobile comprenant :
- un corps d'antivol destiné à recevoir un verrou susceptible de tourner entre une position neutre et une position démarrage en passant par une position intermédiaire,
- une came destinée à être solidaire en rotation du verrou pour actionner des moyens de verrouillage de l'antivol en fonction de la position du verrou,
- un moyen anti-retour pour empêcher ladite came de tourner en sens contraire vers la position démarrage après qu'elle a atteint la position intermédiaire lorsqu'elle passe de la position démarrage vers la position neutre sans passer d'abord par la position neutre,
caractérisé en ce qu'un profil de came est ménagé dans une paroi radiale de ladite came et en ce que ledit antivol comporte en outre un doigt de commande et un moyen de rappel élastique dudit doigt de commande à l'encontre dudit profil de came, ledit profil de came et ledit doigt de commande coopérant d'une part pour former un moyen anti-retour et d'autre part, pour indexer la position angulaire de la came.

Selon un mode de réalisation, le doigt de commande étant sollicité en pivotement vers le profil de came et en translation axiale contre une butée axiale du profil de came. Ainsi, lorsque la came est entraînée en rotation, les reliefs radiaux du profil de came génèrent un ressenti haptique à l'utilisateur. En outre, la butée axiale permet de maintenir le doigt de commande dans le profil de came.

L'antivol peut comporter un support dans lequel est ménagé un rail de guidage. Le doigt de commande peut présenter une portion conformée, par exemple cylindrique, pour translater et pivoter dans le rail de guidage. Ledit moyen de rappel élastique peut être interposé entre une extrémité du doigt de commande et ledit support.

Ledit support, ledit moyen de rappel élastique et ledit doigt de commande peuvent également former un module d'anti-retour et d'indexage manipulable présentant des moyens d'assemblage audit corps d'antivol. Le module d'anti-retour et d'indexage peut ainsi être facilement assemblé au corps d'antivol au cours du procédé d'assemblage par des moyens à la fois fiables, peu encombrants et peu coûteux à réaliser.

Selon un mode de réalisation, ledit profil de came comporte une piste aller coopérant avec le doigt de commande sur une trajectoire en rotation aller de la came de la position neutre à la position démarrage en passant par la position intermédiaire et une piste retour coopérant avec le doigt de commande sur une trajectoire en rotation retour de la came de la position démarrage à la position neutre en passant par la position intermédiaire, la piste retour comprenant en outre un relief radial anti-retour coopérant avec le doigt de commande en position intermédiaire pour bloquer la rotation en sens contraire de la came vers la position démarrage.

Ledit relief radial anti-retour comporte par exemple une marche. La marche peut présenter une portion amont en rampe, une paroi transversale et un creux au droit de ladite paroi transversale, la portion amont en rampe s'épaississant radialement jusqu'à la paroi transversale. La position du doigt de commande dans le creux du profil de came après avoir basculé de la marche forme une position stable d'indexage. Le relief radial anti-retour forme ainsi un moyen anti-retour ainsi qu'un moyen d'indexage de la position intermédiaire.

Par ailleurs, en vue d'indexer les positions neutre et intermédiaires prises par la came, le profil de came peut présenter d'autres reliefs radiaux provoquant un ressenti haptique à l'utilisateur manipulant la clef de verrou. On prévoit ainsi par exemple que ledit profil de came présente au moins une pente d'indexage coopérant avec le doigt de commande pour indexer le départ ou l'arrivée de la came d'une position neutre ou intermédiaire.

Plus précisément, la butée axiale peut présenter une première pente d'indexage suivie d'un creux, coopérant avec le doigt de commande pour indexer le départ ou l'arrivée en position neutre de la came. La butée axiale de la piste aller présente une deuxième pente d'indexage coopérant avec le doigt de commande pour indexer l'arrivée ou le départ de la came en position intermédiaire. La piste retour du profil de came présente une troisième pente d'indexage coopérant avec le doigt de commande pour indexer le départ de la came de la position intermédiaire.

En outre, la butée axiale de la piste aller peut s'effacer en position démarrage pour laisser le doigt de commande coopérer avec la butée axiale de la piste retour, décalée axialement de la butée axiale de la piste aller, faisant ainsi basculer le doigt de commande de la piste aller vers la piste retour pour que le doigt de commande puisse coopérer avec le relief radial anti-retour.

La butée axiale du profil de came est par exemple formée par un bord périphérique d'extrémité de la came entre la position neutre et la position intermédiaire de la piste aller. En outre, la butée axiale de la piste retour présente par exemple une portion arrondie entre les positions intermédiaires et neutre, pour guider le retour du doigt de commande sous le bord périphérique d'extrémité de la came.

D'autres avantages et caractéristiques apparaîtront à la lecture de la description de l'invention donnée à titre d'exemple, ainsi que sur les figures annexées sur lesquelles :
- la figure 1 représente une vue partielle en perspective d'un antivol de direction pour véhicule automobile,
- la figure 2 représente une came, un verrou et un module d'anti-retour et d'indexage de l'antivol de la figure 1, la came étant en position neutre,
- la figure 3 représente un module d'anti-retour et d'indexage à l'état assemblé,
- la figure 4 représente le module d'anti-retour et d'indexage de la figure 3 à l'état désassemblé,
- la figure 5 représente une vue partielle en perspective de la came de la figure 2,
- la figure 6 est une vue de dessus de l'antivol de la figure 2,
- la figure 7 est une vue des éléments de la figure 2, dans laquelle la came est en cours de pivotement entre la position neutre et une position intermédiaire sur une trajectoire de rotation aller,
- la figure 8 est une vue des éléments de la figure 2, la came étant en position intermédiaire sur la trajectoire de rotation aller,
- la figure 9 est une vue des éléments de la figure 2, la came étant en position démarrage,
- la figure 10 est une vue des éléments de la figure 2 couplés à une tirette d'entraînement du pêne de l'antivol, la came étant en position intermédiaire sur la trajectoire de rotation retour,
- la figure 11 est une vue des éléments de la figure 2, la came étant vue en coupe radiale en position intermédiaire sur la trajectoire de rotation retour, et
- la figure 12 est une vue des éléments de la figure 2, la came étant en cours de pivotement entre la position intermédiaire et la position neutre sur la trajectoire de rotation retour.

Sur ces figures, les éléments identiques portent les mêmes numéros de référence.

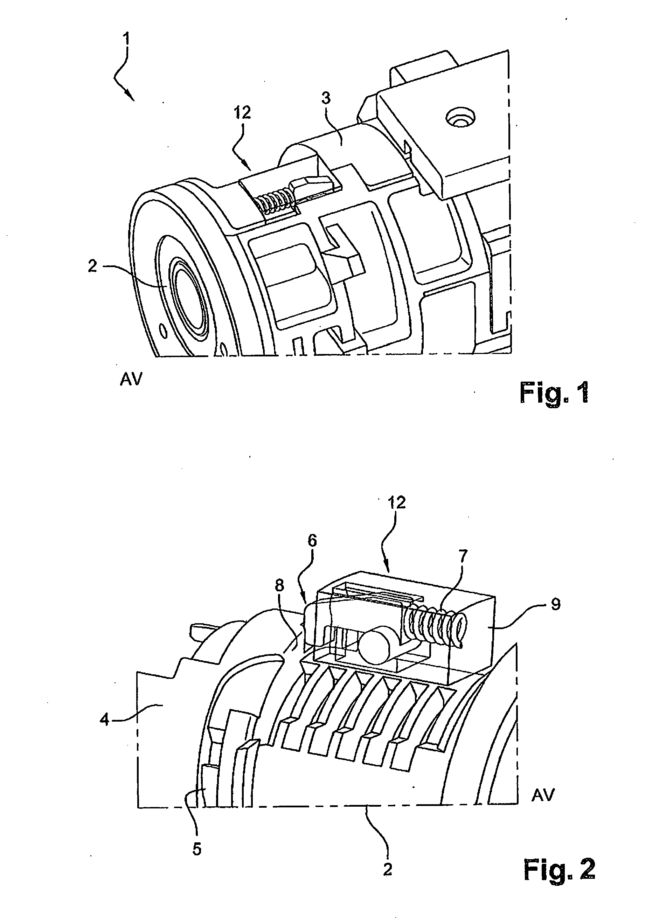

Les figures 1 à 12 illustrent un exemple de réalisation d'antivol de direction pour véhicule automobile 1 destiné à être assemblé autour d'une colonne de direction. De manière connue en soi et non représenté sur les figures, l'antivol 1 comporte des moyens de verrouillage comportant un pêne monté mobile en translation dans un corps d'antivol, entre une position décondamnée dans laquelle il est destiné à être disposé à distance de la colonne de direction et une position condamnée dans laquelle il est destiné à bloquer ladite colonne. Le pêne est commandé en déplacement par l'intermédiaire d'un verrou 2, via un moyen d'entraînement du pêne couplé à une came de l'antivol. On distingue l'entrée de clef du verrou à l'avant (AV) de l'antivol 1 sur la figure 1.

Comme on peut le voir sur la figure 2, le verrou 2 est solidarisé à la came 4 à l'extrémité arrière du verrou 2. Une fois montés ensemble dans le corps d'antivol 3, le verrou 2 et la came 4 peuvent tourner ensemble sous l'action de la clef de verrou correspondante, autour d'un axe de rotation parallèle à une direction dite axiale, entre plusieurs positions angulaires, conjointement avec un commutateur électrique, pour commander divers organes du véhicule. Ainsi, le verrou 2 et la came 4 peuvent être placés dans une première position angulaire, dite position neutre, comme la position « stop », une position angulaire intermédiaire, dite position « marche » et une deuxième position angulaire extrême, opposée à la première position angulaire neutre, dite position « démarrage ». Dans la position neutre stop, la plupart des circuits électriques du véhicule sont coupés de l'alimentation provenant de la batterie. La position intermédiaire marche correspond par exemple à l'alimentation électrique du circuit d'allumage du moteur thermique du véhicule. La position démarrage alimente en courant un moteur électrique de démarreur susceptible d'entraîner en rotation l'arbre moteur du moteur thermique du véhicule et qui a pour fonction de lancer le moteur thermique. Les positions neutre, intermédiaire et démarrage se succèdent lorsque le verrou 2 et la came 4 sont déplacés de la position neutre vers la position démarrage. Après son passage par la position démarrage, la came 4 est élastiquement ramenée par un ressort de rappel vers sa position intermédiaire marche.

Comme vu précédemment, outre les fonctions électriques du véhicule, le verrou 2 commande la translation du pêne des moyens de verrouillage via la came 4, généralement de manière que le pêne soit en saillie dans la colonne de direction lorsque le verrou 2 est en position stop et la clef retirée, le pêne étant maintenu rentré dans les autres positions du verrou 2.

L'antivol 1 comporte en outre un moyen anti-retour pour empêcher la came 4 de tourner en sens contraire vers la position démarrage après qu'elle a atteint la position intermédiaire lorsqu'elle passe de la position démarrage vers la position neutre sans passer d'abord par la position neutre.

On prévoit qu'un profil de came 5 (figure 2), présentant au moins un relief radial, soit ménagé dans une paroi radiale de la came 4, c'est-à-dire en périphérie de celle-ci. En outre, l'antivol 1 comporte un doigt de commande 6 et un moyen de rappel élastique 7 pour solliciter le doigt de commande 6 à l'encontre du profil de came 5. Le profil de came 5 et le doigt de commande 6 coopèrent d'une part pour former un moyen anti-retour et d'autre part, pour indexer la position angulaire de la came 4. Les reliefs radiaux du profil de came 5 sont alors ressentis par l'utilisateur lorsqu'il tourne la clef de verrou de sorte que le profil de came 5 coopère avec le doigt de commande 6 à la fois pour assurer la fonction d'anti-retour de la came et pour indexer la position de la came 4. On évite ainsi de prévoir deux moyens distincts sur la came 4, pouvant nécessiter des opérations d'usinage complexes pour la mise en oeuvre de ces deux fonctions.

En outre, on prévoit que le doigt de commande 6 soit sollicité en pivotement vers le profil de came 5 et en translation axiale contre une butée axiale 8 du profil de came 5. Ainsi, lorsque la came 4 est entraînée en rotation, les reliefs radiaux du profil de came 5 génèrent un ressenti haptique à l'utilisateur et la butée axiale 8 maintient le doigt de commande 6 dans le profil de came, les reliefs radiaux et la butée axiale 8 participant à l'anti-retour de la came 4.

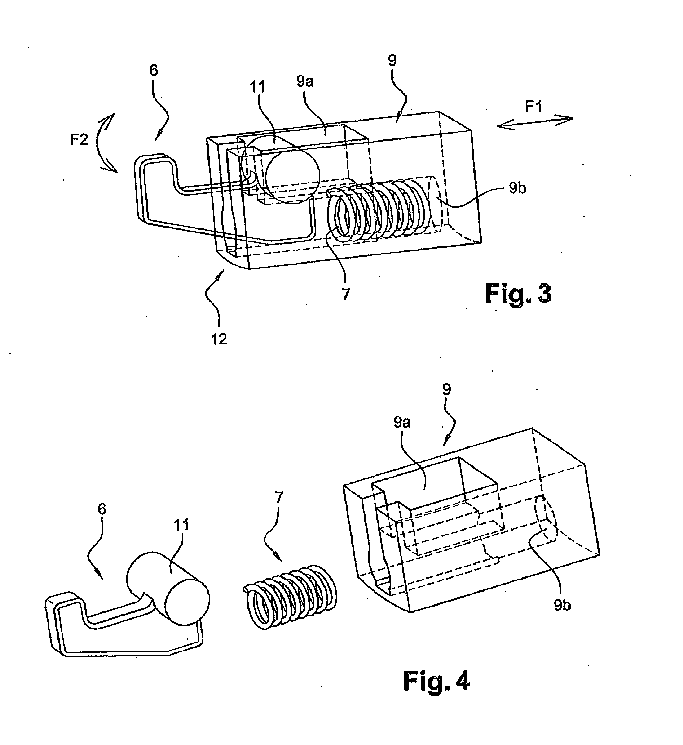

Selon l'exemple de réalisation représenté sur les figures 3 et 4, l'antivol 1 comporte un support 9 dans lequel est ménagé un rail de guidage 9a. Le doigt de commande 6 présente en outre une portion conformée 11 pour coopérer en translation avec le rail de guidage 9a (selon la flèche F1) et pour pivoter vers le profil de came 5 (selon la flèche F2) dans le rail de guidage 9a. La portion conformée 11 présente par exemple une forme cylindrique dont l'axe de révolution est orienté transversalement à la direction de translation F1 du rail de guidage 9a.

On peut prévoir de loger le moyen de rappel élastique 7, tel qu'un ressort de poussée, dans un trou borgne 9b du support 9, le moyen de rappel élastique 7 étant interposé entre une extrémité du doigt de commande 6 et le support 9. Le doigt de commande 6 est ainsi rappelé élastiquement vers sa position saillante au contact du profil de came 5, par le ressort de poussée.

En outre, le support 9, le moyen de rappel élastique 7 et le doigt de commande 6 peuvent former un module autonome d'anti-retour et d'indexage 12 c'est-à-dire une module agencé de telle sorte qu'il soit manipulable et reste assemblé sans avoir à agir en maintien de ses éléments ainsi assemblés (voir par exemple les figures 1 et 3) présentant des moyens d'assemblage, tels que des moyens de clipsage, (non représentés) au corps d'antivol 3. Le module d'anti-retour et d'indexage 12 peut ainsi être facilement assemblé au corps d'antivol 3 au cours du procédé d'assemblage par des moyens à la fois fiables, peu encombrants et peu coûteux à réaliser. Selon une autre forme de réalisation non représentée, le support 9 est directement intégré dans le corps d'antivol 3.

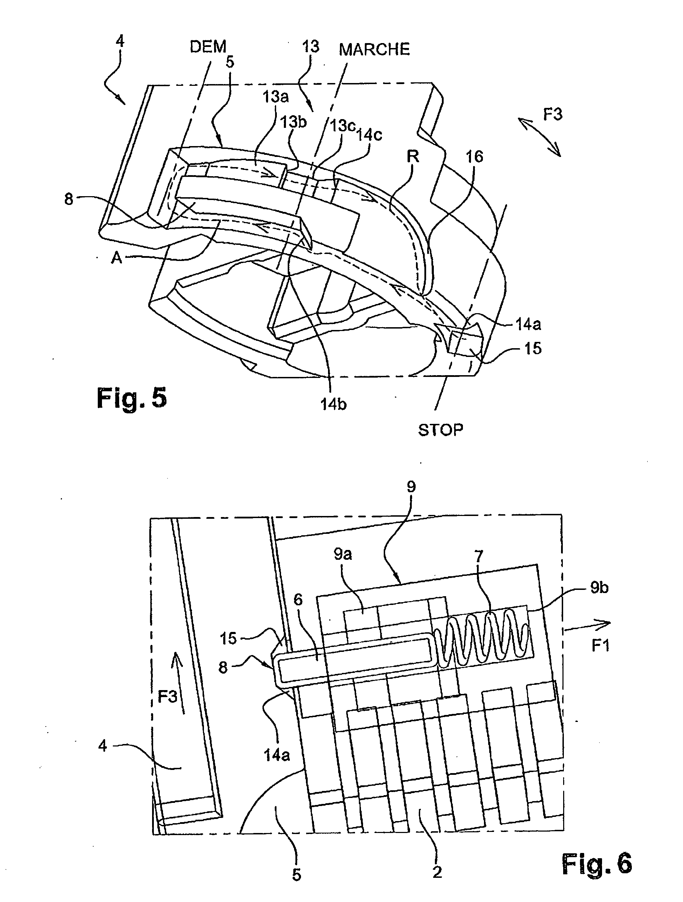

Comme on peut le voir sur la figure 5, le profil de came 5 comporte une piste aller A et une piste retour R. On définit par piste aller A, la partie du profil de came 5 coopérant avec le doigt de commande 6 sur la trajectoire de rotation aller de la came de la position neutre, ici la position STOP, vers la position démarrage DEM en passant par la position intermédiaire MARCHE. On définit par piste retour R, la partie du profil de came 5 coopérant avec le doigt de commande 6 sur la trajectoire retour de la came de la position démarrage DEM vers la position neutre, donnée à titre d'exemple comme étant ici la position STOP, en passant par la position intermédiaire MARCHE. La piste aller A coopère avec le doigt de commande 6 en rotation horaire de la came 4. La piste retour R coopère avec le doigt de commande 6 en rotation antihoraire de la came 4 (voir double flèche F3).

La piste retour R comprend en outre un relief radial anti-retour 13 coopérant avec le doigt de commande 6 en position intermédiaire MARCHE pour bloquer la rotation en sens contraire (c'est-à-dire horaire) de la came 4 vers la position démarrage DEM après qu'elle a atteint la position intermédiaire MARCHE.

Le relief radial anti-retour 13 comporte par exemple une marche. La marche peut présenter une portion amont en rampe 13a s'épaississant radialement jusqu'à une paroi transversale 13b du relief radial anti-retour 13. La rampe 13a peut être légèrement bombée. Ce relief en rampe 13a fait pivoter le doigt de commande 6 contre sa sollicitation élastique. La paroi 13b est transversale à la direction de rotation de la came 4 au droit d'un creux 13c, de manière qu'une fois la marche franchie, le doigt de commande 6 coopère avec la paroi transversale 13b pour bloquer la rotation de la came 4 de la position intermédiaire MARCHE vers la position démarrage DEM. La position du doigt de commande 6 dans le creux 13a du profil de came 5 après avoir basculé de la marche forme une position stable d'indexage. Le relief radial anti-retour 13 forme ainsi un moyen anti-retour ainsi qu'un moyen d'indexage de la position intermédiaire MARCHE.

Par ailleurs, en vue d'indexer les positions neutre et intermédiaires prises par la came 4, le profil de came présente d'autres reliefs radiaux provoquant un ressenti haptique à l'utilisateur manipulant la clef de verrou.

On prévoit par exemple que le profil de came 5 présente au moins une pente d'indexage coopérant avec le doigt de commande 6 pour indexer le départ ou l'arrivée de la came d'une position neutre ou intermédiaire.

Ainsi et comme on peut le voir sur la figure 5, la butée axiale 8 présente une première pente d'indexage 14a suivie d'un creux 15, coopérant avec le doigt de commande 6 pour indexer le départ ou l'arrivée en position neutre STOP de la came 4. La butée axiale 8 de la piste aller A présente une deuxième pente d'indexage 14b coopérant avec le doigt de commande 6 pour indexer l'arrivée ou le départ de la came 4 en position intermédiaire MARCHE. La piste retour R du profil de came 5 présente une troisième pente d'indexage 14c coopérant avec le doigt de commande 6 pour indexer le départ de la came 4 de la position intermédiaire MARCHE, le creux 13b s'épaississant ainsi radialement après la marche du relief anti-retour 13.

Les pentes d'indexage 14a, 14b, 14c modifient la résistance de rotation du verrou, générant un ressenti haptique pour indexer le départ ou l'arrivée de la came 4 vers une position neutre ou intermédiaire.

En outre, la butée axiale 8 de la piste aller A s'efface en position démarrage DEM pour laisser le doigt de commande 6 coopérer avec la butée axiale 8 de la piste retour R, décalée axialement de la butée axiale de la piste aller. Le profil de came 5 est alors configuré pour faire basculer le doigt de commande 6 de la piste aller A vers la piste retour R en position démarrage DEM, de manière que le doigt de commande 6 coopère avec le relief radial anti-retour 13 sur la piste retour R en atteignant la position intermédiaire MARCHE.

La butée axiale 8 du profil de came 5 peut être formée dans un bord périphérique d'extrémité de la came 4 entre la position neutre STOP et la position intermédiaire MARCHE de la piste aller A. De plus, la butée axiale 8 de la piste retour R présente une portion arrondie 16 entre les positions intermédiaires MARCHE et neutre STOP, pour guider le retour du doigt de commande sous le bord périphérique d'extrémité de la came 4.

En fonctionnement, en considérant initialement le verrou 2 en position neutre STOP (figures 2 et 6), le doigt de commande 6 est emboîté et indexé dans le creux 15 de la butée axiale 8. La rotation du verrou 2 par un utilisateur au moyen de la clef de verrou a pour effet de faire pivoter la came 4 en sens horaire F3, le doigt de commande 6 coopérant avec la première pente d'indexage 14a pour se translater légèrement dans le support 9 selon la direction F1, comprimant le moyen de rappel élastique 7. L'utilisateur ressent cette modification de force à exercer pour activer la clef de verrou, ce qui indexe le départ de la position neutre STOP de la came 4.

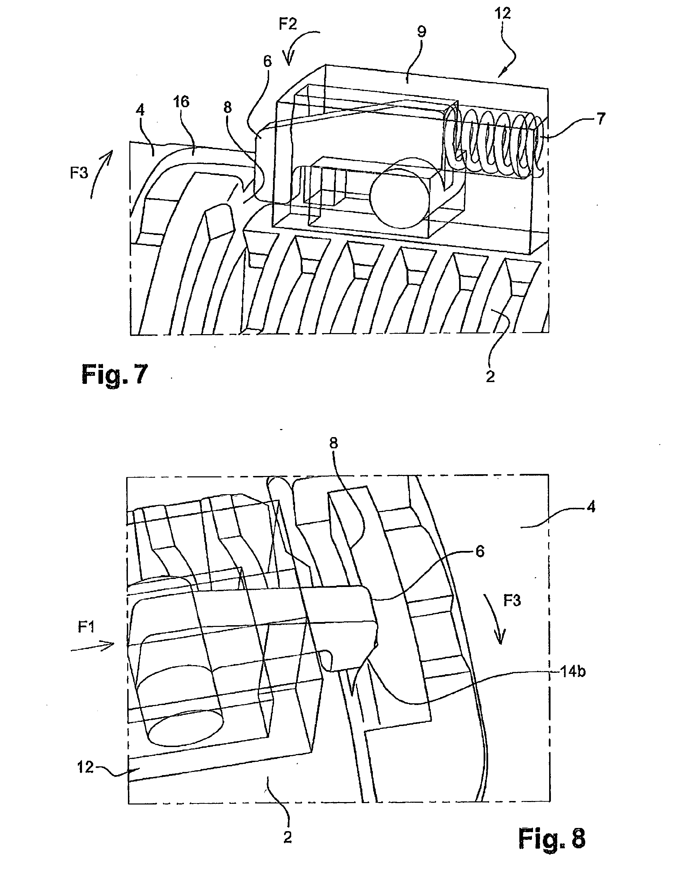

Puis, lorsque la came 4 pivote entre la position neutre STOP et la position intermédiaire MARCHE de la piste aller A, le doigt de commande 6 pivote suivant la flèche F2 (figure 7) passant sous le bord périphérique d'extrémité de la came 4. Ayant ainsi pivoté, le doigt de commande 6 reste en butée contre le bord périphérique d'extrémité de la came 4 au moment où le doigt de commande 6 « passe » devant la piste retour R.

Le doigt de commande 6 coopère ensuite avec la deuxième pente d'indexage 14b de la piste aller A, laissant le doigt de commande 6 ressortir progressivement du support 9 (selon la flèche F1 sur la figure 8), pour indexer l'arrivée de la came 4 en position intermédiaire MARCHE. Dans cette position intermédiaire, le conducteur peut tourner la came 4 vers la position démarrage DEM ou vers la position initiale neutre STOP. Le départ de la position intermédiaire MARCHE retournant vers la position STOP est indexé par la deuxième pente d'indexage 14b. En outre, dans la position intermédiaire MARCHE, le ressort de rappel de la came 4 (non représenté) vient en prise avec la came et participe à son indexation en rappelant la came vers la position intermédiaire MARCHE.

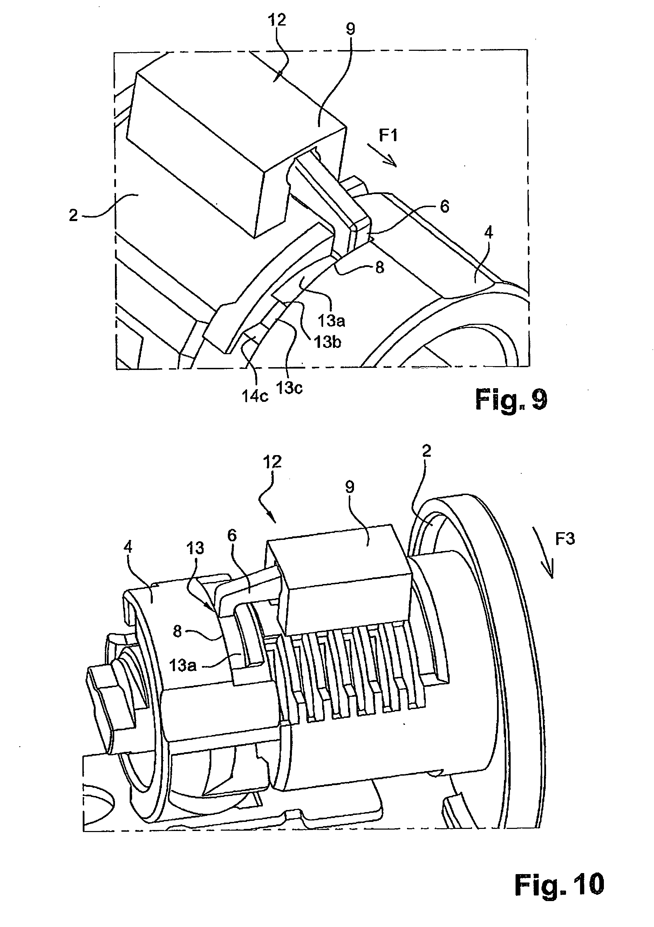

Lorsque l'utilisateur continue de tourner la clef de verrou en sens horaire jusqu'à la position démarrage DEM, la butée axiale de la piste aller A s'efface, laissant le doigt de commande 6 sollicité axialement, se translater en faisant saillie du support 9 (dans la direction de la flèche F1 sur la figure 9) vers la butée axiale 8 de la piste retour R, décalée axialement de la butée axiale de la piste aller. Ainsi, le profil de came 5 fait basculer le doigt de commande 6 de la piste aller A vers la piste retour R.

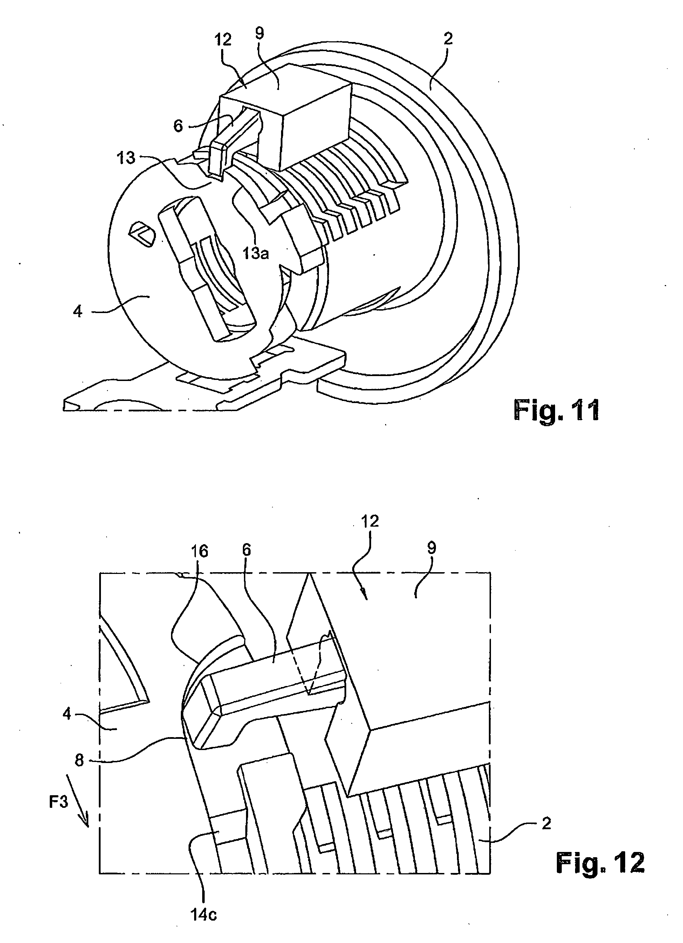

Après la position démarrage, la came 4 est élastiquement rappelée en position intermédiaire MARCHE (rotation dans le sens antihoraire de la flèche F3 sur la figure 10). Sur la piste retour R, la portion amont en rampe 13a de la marche du relief anti-retour 13 fait pivoter le doigt de commande 6 contre son rappel élastique. Puis le doigt de commande 6 tombe de la marche dans la position intermédiaire MARCHE (figures 10 et 11). La paroi transversale 13b coopère avec le doigt de commande 6 pour bloquer la rotation en sens contraire de la came 4 vers la position démarrage DEM. L'arrivée du doigt de commande 6 dans la position intermédiaire MARCHE est indexée par la forme en marche du relief anti-retour 13.

Ainsi, le conducteur ne peut pas retourner la clef de verrou en position démarrage DEM sans repasser d'abord par la position neutre, ici la position STOP. Pour cela, il doit continuer de tourner la clef en sens antihoraire (flèche F3 sur la figure 12). Le doigt de commande 6 coopère alors avec la troisième pente d'indexage 14c pour indexer le départ de la came 4 de la position intermédiaire MARCHE. Puis, le doigt de commande 6 vient en butée sur la portion arrondie 16, faisant progressivement rentrer le doigt de commande 6 dans le support 9, pour le guider progressivement sous le bord périphérique d'extrémité de la came 4 (figure 7). Enfin, le doigt de commande 6 coopère de nouveau avec la première pente d'indexage 14a et le creux 15 pour indexer l'arrivée en position neutre STOP de la came 4 (figures 2 et 6). L'utilisateur peut alors faire une nouvelle tentative de démarrage sans risquer d'endommager un des éléments mécaniques nécessaires à la bonne marche du véhicule.

Bien qu'on ait décrit ici un antivol dont le passage à nouveau par la position STOP soit nécessaire pour autoriser à nouveau un actionnement jusqu'à la position démarrage, d'autres alternatives sont envisageables.

Notamment, la position neutre nécessaire à une nouvelle autorisation d'actionnement en démarrage peut être une position accessoires « ACC », c'est-à-dire une position elle-même intermédiaire entre une position STOP et une position MARCHE. Dans une telle position accessoires, des accessoires tels que tableau de bord, autoradio ou soufflerie sont typiquement alimentés par la batterie.

Un tel mode de réalisation est par exemple mis en oeuvre en utilisant les moyens mécaniques décrits ci-avant comme définissant la position STOP mais cette fois pour définir la position accessoires, la position STOP étant alors définie par des moyens mécaniques amont à ceux décrits par rapport à un sens horaire de rotation du verrou, d'une manière connue en soi par l'homme du métier.

## Revendications

1. Antivol de direction pour véhicule automobile comprenant :
- un corps d'antivol (3) destiné à recevoir un verrou (2) susceptible de tourner entre une position neutre (STOP) et une position démarrage (DEM) en passant par une position intermédiaire (MARCHE),
- une came (4) destinée à être solidaire en rotation du verrou (2) pour actionner des moyens de verrouillage de l'antivol (1) en fonction de la position du verrou (2),
- un moyen anti-retour pour empêcher ladite came (4) de tourner en sens contraire vers la position démarrage (DEM) après qu'elle a atteint la position intermédiaire (MARCHE) lorsqu'elle passe de la position démarrage (DEM) vers la position neutre (STOP) sans passer d'abord par la position neutre (STOP),
**caractérisé en ce qu'**un profil de came (5) est ménagé dans une paroi radiale de ladite came (4) et **en ce que** ledit antivol (1) comporte en outre un doigt de commande (6) et un moyen de rappel élastique dudit doigt de commande (6) à l'encontre dudit profil de came (5), ledit profil de came (5) et ledit doigt de commande (6) coopérant d'une part pour former un moyen anti-retour et d'autre part, pour indexer la position angulaire de la came (4),le doigt de commande (6) étant sollicité en pivotement vers le profil de came (5) et en translation axiale contre une butée axiale (8) du profil de came (5).

2. Antivol selon la revendication précédente, **caractérisé en ce qu'**il comporte un support (9) dans lequel est ménagé un rail de guidage (9a) et **en ce que** le doigt de commande (6) présente une portion conformée (11) pour translater et pivoter dans le rail de guidage (9a).

3. Antivol selon la revendication précédente, **caractérisé en ce que** ladite portion conformée (11) présente une forme cylindrique.

4. Antivol selon l'une des revendications 2 ou 3, **caractérisé en ce que** ledit moyen de rappel élastique est interposé entre une extrémité du doigt de commande (6) et ledit support (9).

5. Antivol selon l'une des revendications précédentes, **caractérisé en ce que** ledit profil de came (5) comporte une piste aller (A) coopérant avec le doigt de commande (6) sur une trajectoire en rotation aller de la came (4) de la position neutre (STOP) à la position démarrage (DEM) en passant par la position intermédiaire (MARCHE) et une piste retour (R) coopérant avec le doigt de commande (6) sur une trajectoire en rotation retour de la came (4) de la position démarrage (DEM) à la position neutre (STOP) en passant par la position intermédiaire (MARCHE), la piste retour (R) comprenant en outre un relief radial anti-retour (13) coopérant avec le doigt de commande (6) en position intermédiaire (MARCHE) pour bloquer la rotation en sens contraire de la came (4) vers la position démarrage (DEM).

6. Antivol selon la revendication précédente, **caractérisé en ce que** ledit relief radial anti- retour (13) comporte une marche.

7. Antivol selon la revendication précédente, **caractérisé en ce que** la marche présente une portion amont en rampe (13a), une paroi transversale (13b) et un creux (13c) au droit de ladite paroi transversale (13b), la portion amont en rampe (13a) s' épaississant radialement jusqu'à la paroi transversale (13b).

8. Antivol selon l'une des revendications 5 à 7, **caractérisé en ce que** ledit profil de came (5) présente au moins une pente d'indexage (14a, 14b, 14c) coopérant avec le doigt de commande (6) pour indexer le départ ou l'arrivée de la came d'une position neutre (STOP) ou intermédiaire (MARCHE).

9. Antivol selon la revendication précédente, **caractérisé en ce que** la butée axiale (8) présente une première pente d'indexage (14a) suivie d'un creux (15), coopérant avec le doigt de commande (6) pour indexer le départ ou l'arrivée en position neutre (STOP) de la came (4), **en ce que** la butée axiale (8) de la piste aller (A) présente une deuxième pente d'indexage (14b) coopérant avec le doigt de commande (6) pour indexer l'arrivée ou le départ de la came (4) en position intermédiaire (MARCHE) et **en ce que** la piste retour (R) du profil de came (5) présente une troisième pente d'indexage (14c) coopérant avec le doigt de commande (6) pour indexer le départ de la came (4) de la position intermédiaire (MARCHE).

10. Antivol selon l'une des revendications 5 à 9, **caractérisé en ce que** la butée axiale de la piste aller (A) s'efface en position démarrage (DEM) pour laisser le doigt de commande (6) coopérer avec la butée axiale de la piste retour (R), décalée axialement de la butée axiale de la piste aller (A).

11. Antivol selon l'une des revendications 5 à 10, **caractérisé en ce que** la butée axiale (8) du profil de came (5) est formée par un bord périphérique d'extrémité de la came (4) entre la position neutre (STOP) et la position intermédiaire (MARCHE) de la piste aller (A).

12. Antivol selon la revendication précédente, **caractérisé en ce que** la butée axiale (8) de la piste retour (R) présente une portion arrondie (16) entre les positions intermédiaires (MARCHE) et neutre (STOP), pour guider le retour du doigt de commande (6) sous le bord périphérique d'extrémité de la came (4).

13. Antivol selon l'une quelconque des revendications précédentes, **caractérisé en ce qu'**il comporte un support (9) portant le doigt de commande (6) ainsi qu'un moyen de rappel élastique du doigt de commande (6) contre le profil de came, l'ensemble formé du support (9), du doigt de commande (6) et du moyen de rappel élastique constituant un module d'anti-retour et d'indexage qui est agencé de sorte qu'il est manipulable (12) avant d'être associé audit corps d'antivol et que ses éléments restent assemblés entre eux pendant une telle manipulation sans avoir à agir pour maintenir ces éléments assemblés entre eux.

## Patentansprüche

1. Lenksäulen-Diebstahlschutz für Kraftfahrzeug, umfassend:
- einen Diebstahlschutz-Körper (3), der ausgelegt ist, um eine Verriegelung (2) aufzunehmen, die sich zwischen einer neutralen Position (STOP) und einer Startposition (DEM) und passierend durch eine Zwischenposition (MARCHE) drehen kann,
- einen Nocken (4), der ausgelegt ist, um in der Drehung mit der Verriegelung (2) fest verbunden zu sein, um Verriegelungsmittel des Diebstahlschutzes (1) je nach der Position der Verriegelung (2) zu betätigen,
- ein Rückschlagmittel, um zu verhindern, dass der Nocken (4) in der entgegen gesetzten Richtung in die Startposition (DEM) dreht, nachdem er die Zwischenposition (MARCHE) erreicht hat, wenn er von der Startposition (DEM) in die neutrale Position (STOP) passiert, ohne zuerst durch die neutrale Position (STOP) zu passieren,
**dadurch gekennzeichnet, dass** ein Nockenprofil (5) in einer radialen Wand des Nockens (4) angeordnet ist, und dadurch, dass der Diebstahlschutz (1) außerdem einen Schaltstift (6) und ein elastisches Rückschlagmittel des Steuerstifts (6) gegen das Nockenprofil (5) umfasst, wobei das Nockenprofil (5) und der Steuerstift (6) einerseits zusammenarbeiten, um ein Rückschlagmittel zu bilden, und andererseits, um die Winkelposition des Nockens (4) zu indizieren, wobei der Steuerstift (6) schwenkend hin zum Nockenprofil (5) und in Translation gegen einen axialen Anschlag (8) des Nockenprofils (5) beansprucht wird.

2. Diebstahlschutz nach dem vorhergehenden Anspruch, **dadurch gekennzeichnet, dass** er einen Träger (9) umfasst, in dem eine Führungsschiene (9a) angebracht ist, und dadurch, dass der Steuerstift (6) einen angepassten Abschnitt (11) aufweist, um in der Führungsschiene (9a) zu verschieben und zu schwenken.

3. Diebstahlschutz nach dem vorhergehenden Anspruch, **dadurch gekennzeichnet, dass** der angepasste Abschnitt (11) eine zylindrische Form aufweist.

4. Diebstahlschutz nach einem der Ansprüche 2 oder 3, **dadurch gekennzeichnet, dass** das elastische Rückstellmittel zwischen einem Ende des Steuerstifts (6) und dem Träger (9) angeordnet ist.

5. Diebstahlschutz nach einem der vorhergehenden Ansprüche, **dadurch gekennzeichnet, dass** das Nockenprofil (5) einen Hinweg (A) umfasst, der mit dem Steuerstift (6) auf einer Hin-Drehbahn des Nockens (4) von der neutralen Position (STOP) in die Startposition (DEM) zusammenarbeitet, wobei er durch die Zwischenposition (MARCHE) passiert, und einen Rückweg (R), der mit dem Steuerstift (6) auf einer Rück-Drehbahn des Nockens (4) von der Startposition (DEM) in die neutrale Position (STOP) zusammenarbeitet, wobei er durch die Startposition (MARCHE) passiert, wobei der Rückweg (R) außerdem ein radiales Rückschlagrelief (13) umfasst, das mit dem Steuerstift (6) in der Zwischenposition (MARCHE) zusammenarbeitet, um die Drehung des Nockens (4) in der entgegen gesetzten Richtung hin zur Startposition (DEM) zu verhindern.

6. Diebstahlschutz nach dem vorhergehenden Anspruch, **dadurch gekennzeichnet, dass** das radiale Rückschlagrelief (13) eine Stufe umfasst.

7. Diebstahlschutz nach dem vorhergehenden Anspruch, **dadurch gekennzeichnet, dass** die Stufe einen ansteigenden vorgelagerten Abschnitt (13a), eine transversale Wand (13b) und einen Hohlraum (13c) senkrecht unter der transversalen Wand (13b) aufweist, wobei sich der ansteigende vorgelagerte Abschnitt (13a) radial bis zur transversalen Wand (13b) verdickt.

8. Diebstahlschutz nach einem der Ansprüche 5 bis 7, **dadurch gekennzeichnet, dass** das Nockenprofil (5) mindestens eine Indexierungsneigung (14a, 14b, 14c) aufweist, die mit dem Steuerstift (6) zusammenarbeitet, um die Entfernung oder die Ankunft des Nockens von einer neutralen (STOP) oder Zwischenposition (MARCHE) zu indexieren.

9. Diebstahlschutz nach dem vorhergehenden Anspruch, **dadurch gekennzeichnet, dass** der axiale Anschlag (8) eine erste Indexierungsneigung (14a) aufweist, gefolgt von einem Hohlraum (15), die mit dem Steuerstift (6) zusammenarbeitet, um die Entfernung oder die Ankunft des Nockens (4) in der neutralen Position (STOP) zu indexieren, dadurch, dass der axiale Anschlag (8) des Hinwegs (A) eine zweite Indexierungsneigung (14b) aufweist, die mit dem Steuerstift (6) zusammenarbeitet, um die Ankunft oder die Entfernung des Nockens (4) in der Zwischenposition (MARCHE) zu indexieren, und dadurch, dass der Rückweg (R) des Nockenprofils (5) eine dritte Indexierungsneigung (14c) aufweist, die mit dem Steuerstift (6) zusammenarbeitet, um die Entfernung des Nockens (4) von der Zwischenposition (MARCHE) zu indexieren.

10. Diebstahlschutz nach einem der Ansprüche 5 bis 9, **dadurch gekennzeichnet, dass** der axiale Anschlag des Hinwegs (A) in der Startposition (DEM) gelöscht wird, um den Steuerstift (6) mit dem axialen Anschlag des Rückwegs (R) zusammenarbeiten zu lassen, der axial vom axialen Anschlag des Hinwegs (A) versetzt ist.

11. Diebstahlschutz nach einem der Ansprüche 5 bis 10, **dadurch gekennzeichnet, dass** der axiale Anschlag (8) des Nockenprofils (5) durch einen peripheren Endrand des Nockens (4) zwischen der neutralen Position (STOP) und der Zwischenposition (MARCHE) des Hinwegs (A) gebildet ist.

12. Diebstahlschutz nach dem vorhergehenden Anspruch, **dadurch gekennzeichnet, dass** der axiale Anschlag (8) des Rückwegs (R) einen abgerundeten Abschnitt (16) zwischen der Zwischen- (MARCHE) und der neutralen Position (STOP) aufweist, um die Rückkehr des Steuerstifts (6) unter dem peripheren Endrand des Nockens (4) zu führen.

13. Diebstahlschutz nach einem der vorhergehenden Ansprüche, **dadurch gekennzeichnet, dass** er einen Träger (9) umfasst, der den Steuerstift (6) trägt, sowie ein elastisches Rückstellmittel des Steuerstifts (6) gegen das Nockenprofil, wobei die Einheit, die aus dem Träger (9), dem Steuerstift (6) und dem elastischen Rückstellmittel gebildet ist, ein Rückschlag- und Indexierungsmodul darstellt, das derart angeordnet ist, dass es manipuliert werden kann (12), bevor es mit dem Diebstahlschutz-Körper assoziiert wird und seine Elemente während einer derartigen Manipulierung untereinander zusammen bleiben, ohne dass Maßnahmen ergriffen werden müssen, um seine Elemente untereinander zusammen zu halten.

## Claims

1. Steering lock antitheft device for motor vehicle comprising:
- an antitheft body (3) intended to house a lock (2) capable of turning between a neutral position (STOP) and a start position (DEM) via an intermediate position (MARCHE),
- a cam (4) intended to rotate as one with the lock (2) in order to actuate locking means of the antitheft device (1) according to the position of the lock (2),
- a non-return means to prevent said cam (4) from turning in the opposite direction towards the start position (DEM) once it has reached the intermediate position (MARCHE) when moving from the start position (DEM) towards the neutral position (STOP) without first moving via the neutral position (STOP),
**characterised in that** a cam profile (5) is arranged in a radial wall of said cam (4) and **in that** said antitheft device (1) further comprises a control finger (6) and a means of elastically returning said control finger (6) against said cam profile (5), said cam profile (5) and said control finger (6) working together on the one hand to form a non-return means and on the other hand, to index the angular position of the cam (4), with the control finger (6) being urged in pivoting towards the cam profile (5) and an axial translation against an axial abutment (8) of the cam profile (5).

2. Antitheft device as claimed in the preceding claim, **characterised in that** it comprises a support (9) wherein is arranged a guide rail (9a) and **in that** the control finger (6) has a shaped portion (11) to translate and pivot in the guide rail (9a).

3. Antitheft device as claimed in the preceding claim, **characterised in that** said shaped portion (11) has a cylindrical shape.

4. Antitheft device according to one of claims 2 or 3, **characterised in that** said means of elastically returning us interposed between an end of the control finger (6) and said support (9).

5. Antitheft device according to one of the preceding claims, **characterised in that** said cam profile (5) comprises an outgoing track (A) working together with the control finger (6) on a trajectory as outgoing rotation of the cam (4) from the neutral position (STOP) to the start position (DEM) via the intermediate position (MARCHE) and a return track (R) working together with the control finger (6) on a trajectory as return rotation of the cam (4) from the start position (DEM) to the neutral position (STOP) via the intermediate position (MARCHE), with the return track (R) further comprising an anti-return radial relief (13) working together with the control finger (6) in intermediate position (MARCHE) in order to block the rotation in the opposite direction of the cam (4) towards the start position (DEM).

6. Antitheft device as claimed in the preceding claim, **characterised in that** said anti-return radial relief (13) comprises a step.

7. Antitheft device as claimed in the preceding claim, **characterised in that** the step has an upstream portion in a ramp (13a), a transverse wall (13b) and a trough (13c) at a right angle to said transverse wall (13b), with the upstream portion in a ramp (13a) thickening radially to the transverse wall (13b).

8. Antitheft device according to one of claims 5 to 7, **characterised in that** said cam profile (5) has at least one indexing slope (14a, 14b, 14c) working together with the control finger (6) in order to index the departure or the arrival of the cam from a neutral (STOP) or intermediate (MARCHE) position.

9. Antitheft device as claimed in the preceding claim, **characterised in that** the axial abutment (8) has a first indexing slope (14a) followed by a trough (15), working together with the control finger (6) in order to index the departure or the arrival in neutral position (STOP) of the cam (4), **in that** the axial abutment (8) of the outgoing track (A) has a second indexing slope (14b) working together with the control finger (6) in order to index the departure or the arrival of the cam (4) in intermediate position (MARCHE) and **in that** the return track (R) of the cam profile (5) has a third indexing slope (14c) working together with the control finger (6) in order to index the departure of the cam (4) from the intermediate position (MARCHE).

10. Antitheft device according to one of claims 5 to 9, **characterised in that** the axial abutment of the outgoing track (A) is removed in the start position (DEM) in order to leave the control finger (6) to work together with the axial abutment of the return track (R), offset axially from the axial abutment of the outgoing track (A).

11. Antitheft device according to one of claims 5 to 10, **characterised in that** the axial abutment (8) of the cam profile (5) is formed by a peripheral end edge of the cam (4) between the neutral position (STOP) and the intermediate position (MARCHE) of the outgoing track (A).

12. Antitheft device as claimed in the preceding claim, **characterised in that** the axial abutment (8) of the return track (R) has a rounded portion (16) between the intermediate (MARCHE) and neutral (STOP) positions, in order to guide the return of the control finger (6) under the peripheral end edge of the cam (4).

13. Antitheft device as claimed in any preceding claim, **characterised in that** it comprises a support (9) bearing the control finger (6) as well as a means for elastically returning the control finger (6) against the cam profile, with the unit formed of the support (9), of the control finger (6) and of the means for elastic return comprising an anti-return and indexing module which is arranged in such a way that it can be manipulated (12) before it is associated with said antitheft body and that its elements remain assembled together during such a manipulation without having to act in order to maintain these elements assembled together.
